# EUROPEAN PATENT SPECIFICATION

(11) **EP 1 847 512 B1**
(45) Date of publication and mention of the grant of the patent: **06.06.2012**
(21) Application number: 06713334.8
(22) Date of filing: 08.02.2006
(51) Int. Cl.: C01G 51/00, C08K 3/22, C08L 101/00, C09C 1/24, C09D 5/33, C09K 3/00

(54) **INFRARED REFLECTING BLACK PIGMENT, COATING MATERIAL AND RESIN COMPOSITION**
INFRAROTREFLEKTIERENDES SCHWARZPIGMENT, BESCHICHTUNGSMASSE UND HARZZUSAMMENSETZUNG
PIGMENT NOIR RÉFLÉCHISSANT LES INFRAROUGES, MATIÈRE DE REVÊTEMENT ET COMPOSITION DE RÉSINE

(30) Priority: 10.02.2005 JP 2005035172; 29.12.2005 JP 2005380578
(43) Date of publication of application: 24.10.2007
(73) Proprietor: Toda Kogyo Corporation, Hiroshima-ken (JP)
(72) Inventor: SANADA, Kazutoshi, -shi, Hiroshima, 7340007 (JP)
(74) Representative: Woods, Geoffrey Corlett
(86) International application number: PCT/JP2006/302191
(87) International publication number: WO 2006/085563

(56) References cited:
- JP-A- 62 100 417
- JP-A- 2000 072 990
- JP-A- 2000 264 639
- JP-A- 2001 311 049
- JP-A- 2002 188 021

## Description

### TECHNICAL FIELD

The present invention relates to an infrared reflecting black pigment, a paint and a resin composition, and more particularly, to an infrared reflecting black pigment which is capable of providing a heat-shielding paint containing no harmful elements and exhibiting an excellent infrared reflecting property, and a paint and a resin composition containing the pigment.

### BACKGROUND ART

In roads, buildings, storage tanks, automobiles, ships, etc., which are used or located out of doors, an inside temperature thereof is increased when exposed to solar radiation. For this reason, an outside surface of buildings, automobiles, etc., has been painted with a white to light color to reflect sunlight thereon, thereby enhancing a heat-shielding effect thereof to some extent.

However, in particular, roofs of buildings exposed outside are frequently painted with a deep to black color to make stains or contamination thereon unremarkable. Buildings, automobiles, etc., whose outside surface is painted with a deep color to black color, tend to absorb sunlight as compared to those having an outside surface painted with a light to white color, and tend to suffer from considerable increase in inside temperature when exposed to solar radiation. Such a high inside temperature of buildings, automobiles, etc., is undesirable for transportation or storage of products.

From the standpoint of saving energies required for preventing global warming-up problems, it has been strongly demanded to suppress the increase in inside temperature of buildings, automobiles, etc., whose outside surface exhibits deep color to black color.

In order to prevent the increase in inside temperature of buildings, automobiles, etc., whose outside surface is painted with a deep color to black color, there have been conventionally used heat-shielding black paints. For example, there has been proposed a black calcined pigment having a spinel structure composed of CoO, Cr₂O₃ and Fe₂O₃ (refer to Japanese Patent Application Laid-Open (KOKAI) No. 2000-72990). However, the black calcined pigment contains Cr as a harmful substance and has an average reflectance of less than 35% in an infrared wavelength range of 780 to 2500 nm, and, as a result, may fail to exhibit a sufficient heat-shielding effect.

There has been proposed a black pigment in the form of a calcined pigment containing Fe₂O₃ as an essential component together with Cr₂O₃, Mn₂O₃ or NiO (refer to Japanese Patent Application Laid-Open (KOKAI) No. 2001-311049). However, the black calcined pigment contains Cr as a harmful substance.

There has also been proposed a black composite oxide made of a rare earth element, an alkali earth metal and iron (refer to Japanese Patent Application Laid-Open (KOKAI) No. 2004-83616). However, the black calcined pigment may fail to exhibit a sufficient heat-shielding effect.

In addition, there has been proposed a strontium iron oxide perovskite having an excellent blackness (refer to Japanese Patent Application Laid-Open (KOKAI) No. 2000-264639). However, the strontium iron oxide perovskite has an average reflectance of not more than 10% in a visible light wavelength range of 250 to 780 nm and an average reflectance of less than 35% in an infrared wavelength range of 780 to 2500 nm and, therefore, may fail to exhibit a sufficient heat-shielding effect.

Further, there has been proposed a magnesium/aluminum-containing iron oxide having an excellent blackness (refer to Japanese Patent Application Laid-Open (KOKAI) No. 2003-238164). However, the iron oxide has an average reflectance of not more than 10% in a visible light wavelength range of 250 to 780 nm and an average reflectance of less than 30% in an infrared wavelength range of 780 to 2500 nm and, therefore, may fail to exhibit a sufficient heat-shielding effect.

### PROBLEM TO BE SOLVED BY THE INVENTION

The present invention has been made in view of the above conventional problems. An object of the present invention is to provide an infrared reflecting black pigment containing no harmful elements and exhibiting an excellent infrared reflecting property. Another object of the present invention is to provide a paint which contains a black pigment containing no harmful elements and exhibiting an excellent infrared reflecting property. The other object of the present invention is to provide a resin composition which contains a black pigment containing no harmful elements and exhibiting an excellent infrared reflecting property.

### MEANS FOR SOLVING PROBLEM

As a result of the present inventors' earnest study for solving the above problems, it has been found that a composite oxide containing Fe, Co, Al and at least one metal selected from the group consisting of Mg, Ca, Sr, Ba, Ti, Zn, Sn, Zr, Si and Cu and having an average particle diameter of 0.02 to 2.0 µm, contains no harmful elements, and can exhibit an excellent infrared reflecting property although it is a black pigment.

The present invention has been attained on the basis of the above finding. To accomplish the aims, there is provided an infrared reflecting black pigment comprising a composite oxide containing Fe, Co, Al and at least one metal selected from Mg, Ca, Sr, Ba, Ti, Zn, Sn, Zr, Si and Cu, and having an average particle diameter of 0.02 to 2.0 µm and a blackness (L* value) of not more than 30.

In another aspect of the present invention, there is provided a paint comprising the above infrared reflecting black pigment.

In another aspect of the present invention, there is provided a resin composition comprising the above infrared reflecting black pigment.

### EFFECT OF THE INVENTION

In accordance with the present invention, there are provided an infrared reflecting black pigment which contains no harmful elements, and can exhibit an excellent infrared reflecting property; and a paint and a resin composition containing the black pigment.

### PREFERRED EMBODIMENTS FOR CARRYING OUT THE INVENTION

The present invention is described in detail below. First, the infrared reflecting black pigment of the present invention (hereinafter occasionally referred to merely as a "black pigment") is described. The infrared reflecting black pigment of the present invention, comprises a composite oxide containing Fe, Co, Al and at least one metal selected from Mg, Ca, Sr, Ba, Ti, Zn, Sn, Zr, Si and Cu, and has an average particle diameter of 0.02 to 2.0 µm and a blackness (L* value) of not more than 30.

The infrared reflecting black pigment according to the present invention usually has a spinel-type or magnetoplumbite-type crystal structure. Meanwhile, the infrared reflecting black pigment inevitably contains impurities derived from various raw materials. Examples of the impurities may include Cr, etc. For example, the Cr content in the black pigment is usually not more than 1% by weight, in particular, the content of Cr⁶⁺ is usually not more than 10 ppm.

The upper limit of the blackness (L* value) of the black pigment according to the present invention is usually about 30.0, preferably 28.0 and more preferably 25.0. When the blackness (L* value) of the black pigment is more than 30, the resultant pigment may fail to exhibit an excellent blackness. The lower limit of the blackness (L* value) of the black pigment is usually about 5.0.

As to an infrared reflecting property of the black pigment according to the present invention, the average reflectance thereof in a visible light wavelength range of 250 to 780 nm is usually not more than 10%, and the average reflectance thereof in an infrared wavelength range of 780 to 2500 nm is usually not less than 35%. When the average reflectance of the black pigment in an infrared wavelength range of 780 to 2500 nm is less than 35%, the infrared reflecting property of the black pigment tends to be insufficient.

The composite oxide constituting the infrared reflecting black pigment according to the present invention contains Fe, Co, Al and at least one metal selected from Mg, Ca, Sr, Ba, Ti, Zn, Sn, Zr, Si and Cu, and usually has a spinel-type crystal structure. Among the metals to be selected, preferred are Mg, Sr, Ba, Ti, Zn, Zr and Si.

The Fe content in the black pigment according to the present invention is usually 10 to 90 mol%, preferably 10 to 80 mol% and more preferably 10 to 50 mol% on the basis of whole metal elements contained in the black pigment. The Co content in the black pigment according to the present invention is usually 1.0 to 70 mol%, preferably 3.0 to 60 mol% and more preferably 5 to 50 mol% on the basis of whole metal elements contained in the black pigment. The Al content in the black pigment according to the present invention is usually 1.0 to 70 mol%, preferably 3.0 to 68 mol% and more preferably 5 to 65 mol% on the basis of whole metal elements contained in the black pigment.

The total content of Fe, Co and Al in the black pigment according to the present invention is usually 20 to 98 mol%, preferably 30 to 95 mol% and more preferably 40 to 95 mol% on the basis of whole metal elements contained in the black pigment.

When the contents of Fe, Co and Al in the black pigment according to the present invention are respectively out of the above-specified ranges, the resultant pigment tends to have a blackness (L* value) of more than 30, and, as a result, tends to exhibit an average reflectance of less than 35% in an infrared wavelength range of 780 to 2500 nm.

The content of the at least one metal selected from the group consisting of Mg, Ca, Sr, Ba, Ti, Zn, Sn, Zr, Si and Cu in the black pigment according to the present invention is usually 1.0 to 60 mol% and preferably 1.0 to 50 mol% on the basis of whole metal elements contained in the black pigment.

The average particle diameter of the black pigment according to the present invention is 0.02 to 2.0 µm, preferably 0.025 to 1.5 µm and more preferably 0.040 to 1.20 µm. When the average particle diameter of the black pigment is more than 2.0 µm, the resultant pigment tends to have a too large particle size, resulting in poor tinting strength thereof. When the average particle diameter of the black pigment is less than 0.02 µm, it may be difficult to disperse the resultant pigment in a vehicle.

The BET specific surface area value of the black pigment according to the present invention is usually 1.0 to 100 m²/g, preferably 1.5 to 75 m²/g and more preferably 1.8 to 60 m²/g. When the BET specific surface area value of the black pigment is less than 1.0 m²/g, the resultant pigment particles tend to become coarse, or sintering tends to be caused within or between the particles, resulting in poor tinting strength thereof.

The a* value of the black pigment according to the present invention is usually -5 to +10 and preferably -1 to +5. When the a* value of the black pigment is out of the above-specified range, the resultant pigment may fail to exhibit an excellent blackness. The b* value of the black pigment according to the present invention is usually -5 to +10 and preferably -1 to +5. When the b* value of the black pigment is out of the above-specified range, the resultant pigment may fail to exhibit an excellent blackness.

In addition, as to an infrared reflecting property of the black pigment according to the present invention, the average reflectance of the black pigment in an infrared wavelength range of 780 to 2500 nm is usually not less than 35% and preferably not less than 37%. When the average reflectance of the black pigment is less than 35%, the resultant pigment may fail to exhibit a sufficient infrared reflecting property.

In accordance with the present invention, the obtained pigment particles may be further coated with a compound of at least one element selected from the group consisting of Si, Al, Zr and Ti. The amount of the compound coated on the pigment particles is usually 0.1 to 10% by weight and preferably 0.1 to 8% by weight on the basis of the weight of the black pigment. The black pigment coated with such a compound can be further enhanced in dispersibility in a paint and a resin composition.

Next, the process for producing the infrared reflecting black pigment according to the present invention is described.

The infrared reflecting black pigment according to the present invention may be produced by mixing various raw materials with each other and then calcining the resultant mixture. As the starting materials, there may be used oxides, carbonates, nitrates and sulfates of various metal elements described above. The mixing method of the starting materials is not particularly limited as long as these materials can be uniformly mixed with each other, and there may be used either a wet-mixing method or a dry-mixing method. The heat-calcining temperature is usually 700 to 1200°C, and the heating atmosphere may be an atmospheric air. The particles obtained after heating may be washed with water and then pulverized by ordinary methods.

The surface of the particles of the infrared reflecting black pigment produced according to the present invention may be coated with a compound of at least one element selected from the group consisting of Si, Al, Zr and Ti. The surface coating treatment may be conducted by an ordinary method such as a wet method and a dry method.

In the wet coating method, for example, a soluble compound of at least one element selected from the group consisting of Si, A1, Zr and Ti may be added to and mixed in a wet-dispersed slurry of the infrared reflecting black pigment while controlling the pH value thereof with an acid or an alkali to coat the pigment particles with the soluble compound. In the dry coating method, for example, by using a mixing apparatus such as a Henschel mixer, the infrared reflecting black pigment may be coated with a coupling agent containing at least one element selected from the group consisting of Si, Al, Zr and Ti.

Next, the paint containing the black pigment according to the present invention is described. The paint of the present invention composes the black pigment and a paint base material.

The amount of the black pigment blended in the paint is usually 0.5 to 100 parts by weight on the basis of 100 parts by weight of the paint base material. In the consideration of a good handling property of the obtained paint, the amount of the black pigment blended is preferably 1.0 to 100 parts by weight.

The paint base material may comprise a resin, a solvent and, if required, an optional component such as fats and oils, a defoaming agent, an extender pigment, a drying accelerator, a surfactant, a curing accelerator and an assistant.

As the resin, there may be used various resins ordinarily used for solvent-based paints or oil-based printing inks. Specific examples of the resin may include acrylic resins, alkyd resins, polyester resins, polyurethane resins, epoxy resins, phenol resins, melamine resins, amino resins, vinyl chloride resins, silicone resins, rosin-based resins such as gum rosins and lime rosins, maleic acid resins, polyamide resins, nitrocellulose, ethylene-vinyl acetate copolymer resins, rosin-modified resins such as rosin-modified phenol resins and rosin-modified maleic acid resins, and petroleum resins. In particular, as the resins for water-based paints, there may be used those resins ordinarily used for water-based paints or water-based inks. Specific examples of the resins for water-based paints may include water-soluble acrylic resins, water-soluble styrenemaleic acid resins, water-soluble alkyd resins, water-soluble melamine resins, water-soluble urethane emulsion resins, water-soluble epoxy resins, water-soluble polyester resins, etc.

As the solvent, there may be used those solvents ordinarily used for solvent-based paints. Specific examples of the solvent may include soybean oil, toluene, xylene, a thinner, butyl acetate, methyl acetate, methyl isobutyl ketone, methyl cellosolve, ethyl cellosolve, propyl cellosolve, butyl cellosolve, glycol ether-based solvents such as propylene glycol monomethyl ether, ester-based solvents such as ethyl acetate, butyl acetate and amyl acetate, aliphatic hydrocarbon-based solvents such as hexane, heptane and octane, alicyclic hydrocarbon-based solvents such as cyclohexane, petroleum-based solvents such as mineral spirits, ketone-based solvents such as acetone and methyl ethyl ketone, alcohol-based solvents such as methyl alcohol, ethyl alcohol, propyl alcohol and butyl alcohol, and aliphatic hydrocarbons.

As the solvents for water-based paints, there may be used water and those solvents ordinarily used for water-based paints. Specific examples of the solvents for water-based paints may include water-soluble organic solvents, e.g., alcohol-based solvents such as ethyl alcohol, propyl alcohol and butyl alcohol, glycol ether-based solvents such as methyl cellosolve, ethyl cellosolve, propyl cellosolve and butyl cellosolve, oxyethylene or oxypropylene addition polymers such as diethylene glycol, triethylene glycol, polyethylene glycol, dipropylene glycol, tripropylene glycol and polypropylene glycol, alkylene glycols such as ethylene glycol, propylene glycol and 1,2,6-hexanetriol, glycerol, 2-pyrrolidone, and mixtures of these solvents.

Examples of the fats and oils may include boiled oils obtained by processing dry oils such as linseed oil, tung oil, oiticica oil and safflower oil.

Examples of the defoaming agent may include commercially available products such as "NOPCO 8034 (tradename)", "SN DEFOAMER 477 (tradename)", "SN DEFOAMER 5013 (tradename)", "SN DEFOAMER 247 (tradename)" and "SN DEFOAMER 382 (tradename)" all produced by SAN NOPCO LIMITED and "ANTI-FOAM 08 (tradename)" and "EMULGEN 903 (tradename)" both produced by Kao Corp.

Next, the resin composition containing the black pigment according to the present invention is described. The resin composition of the present invention is composed of the black pigment and a resin composition base material.

The resin composition base material may include a known thermoplastic resin, and various optional additives such as a lubricant, a plasticizer, an antioxidant, an ultraviolet absorber and various stabilizers.

The amount of the black pigment blended in the resin composition is usually 0.01 to 200 parts by weight on the basis of 100 parts by weight of the resin. In particular, in the consideration of a good handling property of the obtained resin composition, the amount of the black pigment blended therein is preferably 0.05 to 150 parts by weight and more preferably 0.1 to 100 parts by weight.

Examples of the resin contained in the resin composition may include polyolefins such as polyethylene, polypropylene, polybutene and polyisobutylene; thermoplastic resins such as polyvinyl chloride, polymethyl pentene, polyethylene terephthalate, polybutylene terephthalate, polystyrene, styrene-acrylate copolymers, styrene-vinyl acetate copolymers, acrylonitrile-butadiene-styrene copolymers, acrylonitrile-EPDM-styrene copolymers, acrylic resins, polyamides, polycarbonates, polyacetals and polyurethanes; rosin-modified maleic acid resins; phenol resins; epoxy resins; polyester resins; silicone resins; rosin esters; rosins; natural rubbers; and synthetic rubbers.

The amount of the additives added is usually not more than 50% by weight on the basis of the total weight of the black pigment and the resin. When the content of the additives in the resin composition is more than 50% by weight, the obtained resin composition tends to be deteriorated in moldability.

The resin composition may be produced by previously intimately mixing the raw resin material with the black pigment, and then applying a strong shear force to the resultant mixture under heating by using a kneader or an extruder to deaggregate agglomerated particles of the black pigment and uniformly disperse the black pigment in the resin composition. Then, the resultant resin composition may be molded into a desired shape according to the objects and requirements upon use.

Also, the resin composition of the present invention may be produced from master batch pellets. The master batch pellets may be produced by mixing a binder resin as the paint base material or the resin composition base material with the black pigment by using a mixing apparatus such as a ribbon blender, a Nauter mixer, a Henschel mixer and a super mixer, and then kneading and molding the resultant mixture by using a known single-screw or twin-screw kneading extruder, etc., followed by cutting the resultant molded material, or by subjecting the resultant mixture to kneading, pulverizing and molding by using a Banbury mixer, a pressing kneader, etc., followed by cutting the resultant molded material. Upon feeding the binder resin and the black pigment to the kneader, these materials may be respectively fed thereto at predetermined ratios, or a mixture of both the materials may be fed thereto.

The average major axis diameter of the master batch pellets is usually 1 to 6 mm and preferably 2 to 5 mm, whereas the average minor axis diameter thereof is usually 2 to 5 mm and preferably 2.5 to 4 mm. When the average major axis diameter of the master batch pellets is less than 1 mm, the workability upon production of the pellets tends to be deteriorated. When the average major axis diameter of the master batch pellets is more than 6 mm, the difference in size between the master batch pellets and diluting binder resin pellets tends to be considerably large, so that it may be difficult to sufficiently disperse the pellets in the diluting binder resin. The master batch pellets may have various shapes such as, for example, an amorphous shape, a granular shape such as a spherical shape, a cylindrical shape, a flake-like shape, etc.

The binder resin used for production of the master batch pellets may be the same as the resin used in the resin composition. Meanwhile, the composition of the binder resin used in the master batch pellets may be the same as or different from that of the diluting binder resin. When using the resin having a different composition from that of the diluting binder resin, the resins to be used may be determined in the consideration of various properties so as to attain a good compatibility between these resins.

The amount of the black pigment blended in the master batch pellets is usually 1 to 200 parts by weight, preferably 1 to 150 parts by weight and more preferably 1 to 100 parts by weight on the basis of 100 parts by weight of the binder resin. When the amount of the black pigment blended in the master batch pellets is less than 1 part by weight, the master batch pellets tend to show an insufficient melt viscosity upon melt-kneading, so that it may be difficult to suitably disperse and mix the black pigment in the resin composition. When the amount of the black pigment blended in the master batch pellets is more than 200 part by weight, the amount of the binder resin tends to be comparatively lower than that of the black pigment, so that it may be difficult to suitably disperse and mix the black pigment in the resin composition. Further, a slight change in amount of the master batch pellets added tends to cause a considerable change in content of the black pigment in the resin composition, so that it may be difficult to attain a desired content of the black pigment in the resin composition, resulting in severe mechanical abrasion thereof.

The infrared reflecting black pigment of the present invention is characterized by containing no harmful elements and exhibiting a high infrared reflecting property.

The reason why the infrared reflecting black pigment of the present invention can exhibit a high infrared reflecting property, is considered by the present inventors as follows, though it is not clearly determined. That is, it is considered that by incorporating, in addition to Fe, Co and Al, at least one metal selected from the group consisting of Mg, Ca, Sr, Ba, Ti, Zn, Sn, Zr, Si and Cu, the resultant pigment can be enhanced in reflectance in an infrared wavelength range of 780 to 2500 nm.

Also, the infrared reflecting black pigment of the present invention can be made containing no harmful metal elements such as Cr⁶⁺ and, therefore, can provide a safe pigment. The infrared reflecting black pigment of the present invention exhibits a good blackness and an excellent infrared reflecting property and, therefore, is suitable as an infrared reflecting black pigment.

### EXAMPLES

The present invention is described in more detail by Examples. However, these Examples are only illustrative and not intended to limit the scope of the present invention. Meanwhile, various properties of the black pigments obtained the following Examples and Comparative Examples were measured by the following methods.
(1) The average particle diameter of the particles was expressed by an average value of particle diameters of 350 particles measured from a micrograph thereof.
(2) The plate ratio was measured by the following method.

That is, 0.5 g of each sample and 0.5 mL of castor oil were intimately kneaded with each other by a Hoover's muller to form a paste. 4.5 g of clear lacquer was added to the obtained paste and was intimately kneaded to form a paint. The obtained paint was applied on a cast-coated paper by using a 150 µm (6-mil) applicator to produce a coating film piece (having a film thickness of about 30 µm). The plate surface diameter and thickness of about 350 particles were measured from a photograph obtained by magnifying a micrograph (x 6000) of a section of the coating film piece which was cut perpendicular to an orientation surface thereof, four times in each of the longitudinal and transverse directions. The plate ratio was calculated by dividing the plate surface diameter by the thickness.
(3) The specific surface area was expressed by the value measured by a BET method.
(4) The contents of respective metal elements contained in the black pigment, were measured by a fluorescent X-ray analyzer "3063M Model" (manufactured by RIGAKU CORPORATION) according to JIS K0119 "General rule of fluorescent X-ray analysis".
(5) The amount of Cr⁶⁺ was measured by an ICP emission spectrophotometer manufactured by SSI NanoTechnology Inc., according to JIS K0102, 65.2.4 "ICP emission spectral analysis".
(6) The hue values (L*, a* and b* values) of the black pigment were determined by measuring the hue of the coating film piece used for the above plate ratio measurement, by using a Multi-Spectro-Colour-Meter "MSC-IS-2D" (manufactured by SUGA TEST INSTRUMENTS CO., LTD.), and expressed by color specification indices (L*, a* and b* values) according to JIS Z 8729.
(7) The reflectance of the black pigment in each of a visible light wavelength range and an infrared wavelength range was determined as follows. That is, reflectance values of the coating film piece used for the above plate ratio measurement in a wavelength range of 250 to 780 nm and a wavelength range of 780 to 2500 nm were respectively measured by using a spectrophotometer "UV-3100PC" manufactured by SHIMADZU CORPORATION, and the reflecting property was expressed by an average reflectance (%) of the values measured in each range.

### Example 1 (Reference Example):

BaCO₃, CoO, TiO₂ and Fe₂O₃ were weighed, mixed with each other and then calcined in air at 1100°C for 2 hr to obtain a calcined product having a composition represented by the formula: BaCoₓTiₓfe₁₂₋₂ₓO₁₉ wherein x is 0.9 (x = 0.9). The resultant calcined product was pulverized, thereby obtaining a black pigment having an average particle diameter of 0.7 µm. It was confirmed that the Fe and Co contents in the obtained black pigment was 78.5 mol% and 6.9 mol%, respectively, on the basis of the whole metal elements contained in the black pigment.

Also, it was confirmed that the thus obtained black pigment exhibited an average reflectance of 7% in a visible light wavelength range of 250 to 780 nm and an average reflectance of 40% in an infrared wavelength range of 780 to 2500 nm.

### Examples 2 to 5 (Reference Examples) and Comparative Examples 1 to 5:

The same procedure as defined in Example 1 was conducted except that the raw materials and composition ratios thereof were changed variously, thereby obtaining black pigments. The essential production conditions are shown in Table 1, and various properties of the obtained infrared reflecting black pigments are shown in Table 2. Meanwhile, "magnetite" used in Comparative Example 5 is "MAT-305" produced by TODA KOGYO CORPORATION.

In the column "Crystal structure" of Table 2, "M type" means a magnetoplumbite type crystal structure, and "Spinel" means a spinel type crystal structure. Meanwhile, the Cr⁶⁺ content of "less than 5 ppm" means that the content is below a detection limit of the measuring apparatus used.

**Table 1**

| Reference Examples and Comparative Examples | Production of black pigment | |
|---|---|---|
| | Composition | Calcination temperature (°C) |
| Reference Example 1 | BaCo_{0.9}Ti_{0.9}Ti_{0.9}Fe_{10.2}O₁₉ | 1100 |
| Reference Example 2 | Co_{0.7}Zn_{0.75}Fe_{2.0}O₄ | 800 |
| Reference Example 3 | Co_{0.5}Mg_{0.5}Fe_{2.0}O₄ | 1000 |
| Reference Example 4 | SrCo_{0.2}Ti_{0.2}Fe_{11.6}O₁₉ | 1150 |
| Reference Example 5 | Co_{0.5}Mg_{0.5}Fe_{2.0}O₄ | 800 |
| Comparative Example 1 | BaCo_{0.9}Ti_{0.9}Fe_{10.9}O₁₉ | 1250 |
| Comparative Example 2 | Co_{0.75}Zn_{0.25}Fe_{2.0}O₄ | 1000 |
| Comparative Example 3 | Co_{1.5}Zn_{0.5}O₃ | 1150 |
| Comparative Example 4 | BaFe₁₂O₁₉ | 1100 |
| Comparative Example 5 | Fe₃O₄ | - |

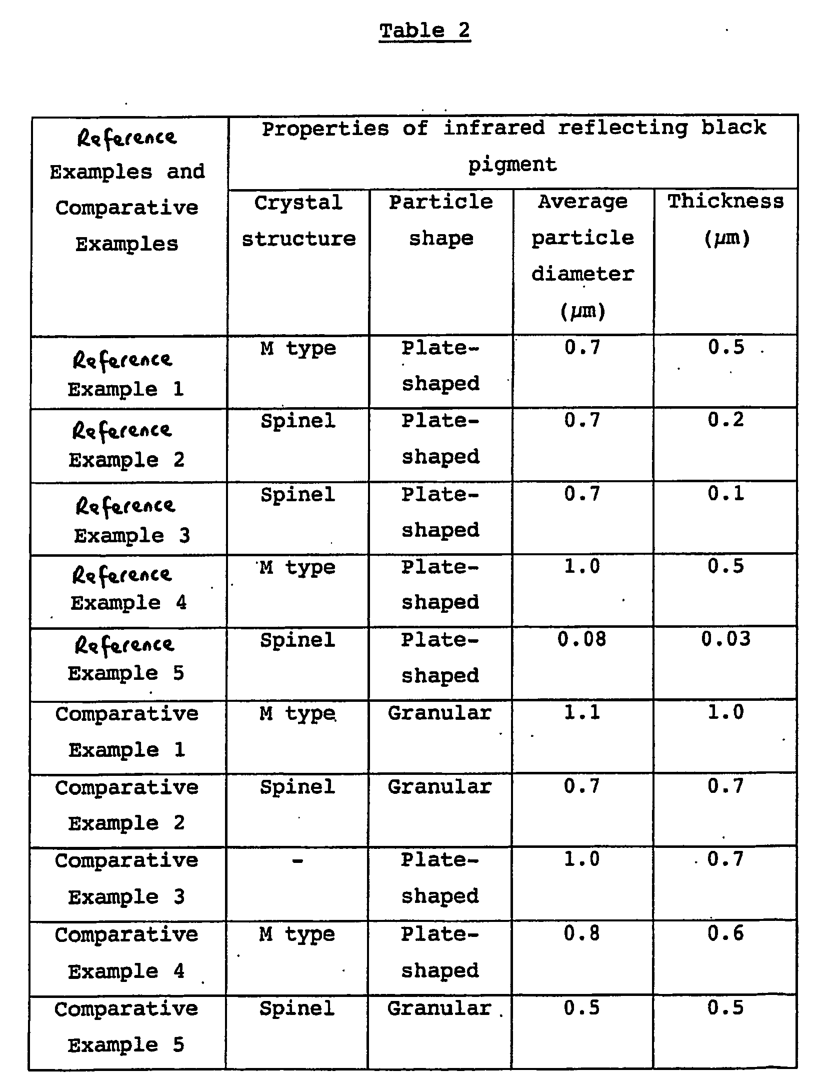

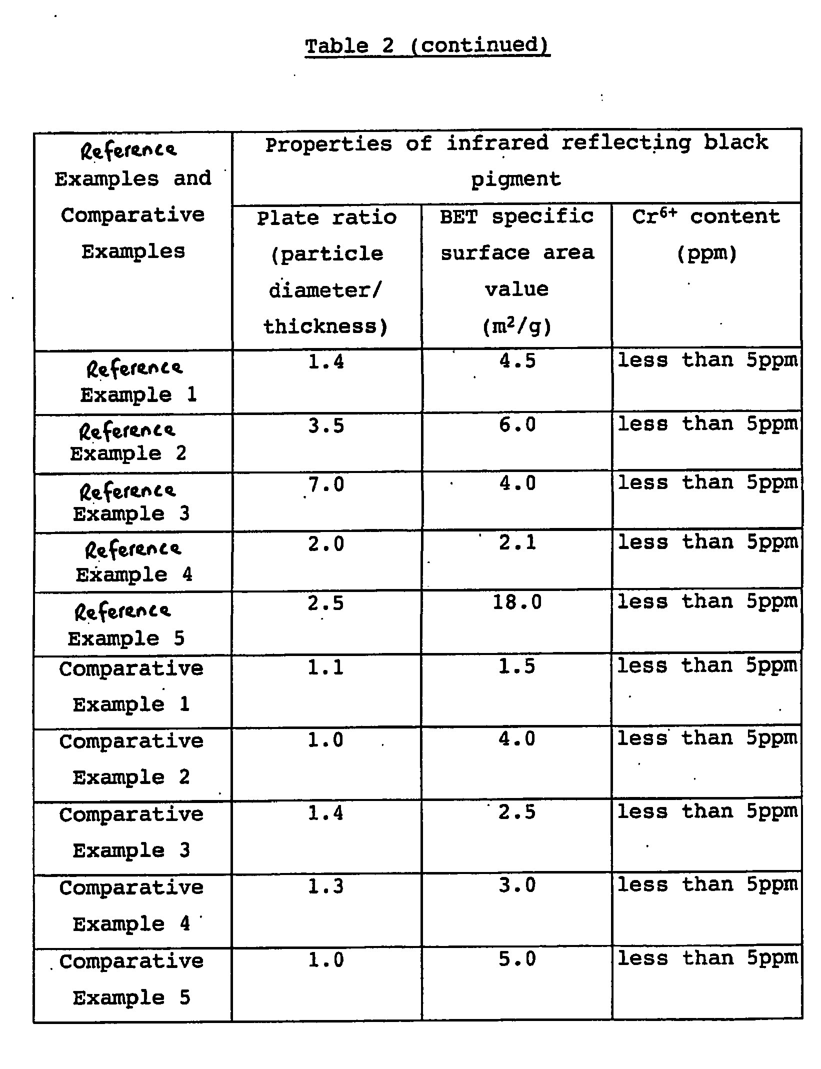

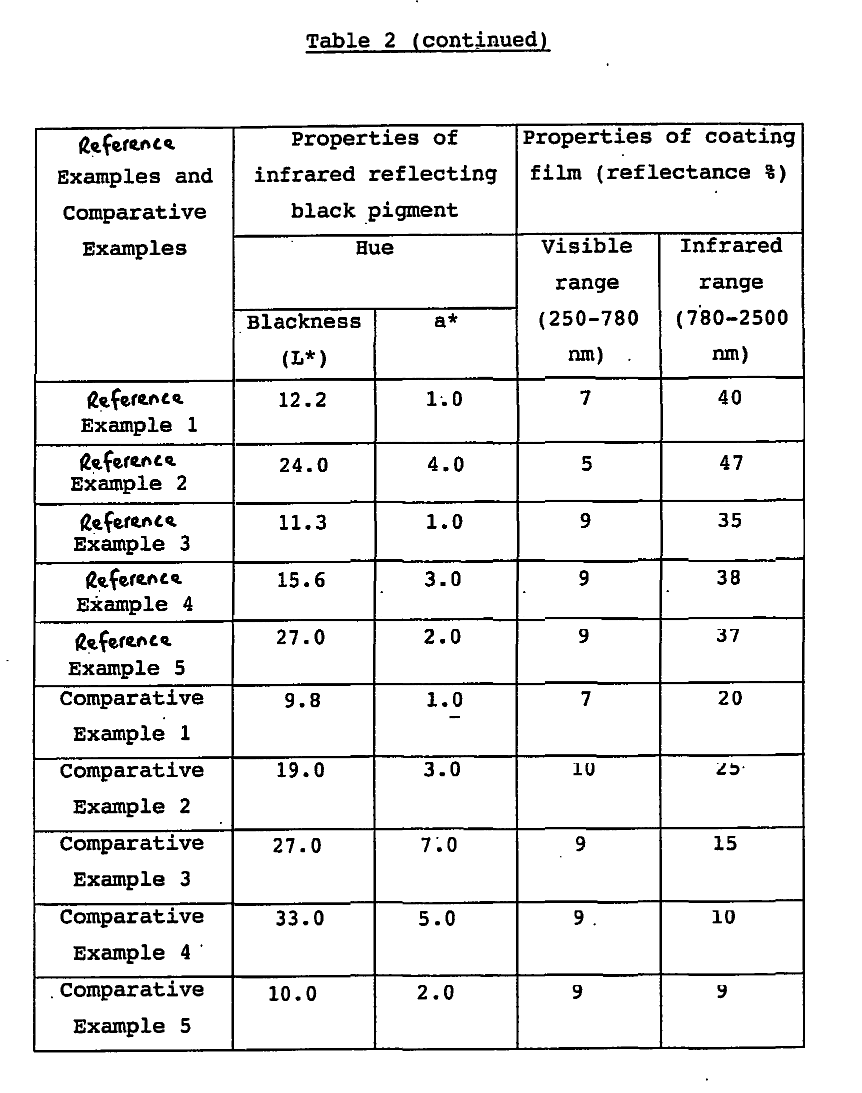

### Example 6:

CoO, Al₂O₃, MgO and Fe₂O₃ were weighed, mixed with each other and then calcined in air at 1100°C for 2 hr to obtain a calcined product having a composition represented by the formula: CoOₓMgO_{x·}n[(Fe_{y}Al_{1-y})₂O₃] wherein x is 0.5, y is 0.5 and n is 1 (x = 0.5, y = 0.5 and n = 1). The resultant calcined product was pulverized, thereby obtaining a black pigment having an average particle diameter of 0.7 *µ*m. It was confirmed that the thus obtained black pigment had a spinel-type crystal structure. The thus obtained black pigment exhibited an average reflectance of 7% in a visible light wavelength range of 250 to 780 nm and an average reflectance of 40% in an infrared wavelength range of 780 to 2500 nm.

### Example 7 and Comparative Examples 6 to 11:

The same procedure as defined in Example 6 was conducted except that the raw materials and composition ratios thereof were changed variously, thereby obtaining black pigments. The essential production conditions are shown in Table 3, and various properties of the obtained black pigments are shown in Table 4.

### Example 8:

The same procedure as defined in Example 6 was conducted except that the raw materials and composition ratios thereof were changed, thereby obtaining a black pigment. Next, the thus obtained black pigment was wet-dispersed in water to obtain a slurry thereof. While maintaining the slurry of the black pigment at 70°C and dropping 1% by weight of a water glass thereinto, the pH value of the slurry was adjusted to 7 with hydrochloric acid and sodium hydroxide, and then the slurry was allowed to stand for one hour. Thereafter, the obtained black pigment was subjected to water-washing, drying and pulverization treatments, thereby obtaining a coated black pigment. The essential production conditions are shown in Table 3, and various properties of the obtained infrared reflecting black pigment are shown in Table 4.

### Example 9:

The same procedure as defined in Example 8 was conducted except that the raw materials and composition ratios thereof as well as the surface treatment agents were changed, thereby obtaining a coated black pigment. The essential production conditions are shown in Table 3, and various properties of the obtained infrared reflecting black pigment are shown in Table 4. Meanwhile, in Table 4, "Spinel" appearing in the column "Crystal structure" means a spinel-type crystal structure, and the Cr⁶⁺ content of "less than 5 ppm" means that the content is below a detection limit of the measuring apparatus used.

**Table 3**

| Examples and Comparative Examples | Production of black pigment | | | |
|---|---|---|---|---|
| | Composition | Calcination temperature (°C) | Surface treatment | |
| | | | Kind | wt% |
| Example 6 | Co_{0.5}Mg_{0.5}Fe_{1.0}Al_{1.0}O₄ | 1100 | None | 0 |
| Example 7 | Co_{1.5}Mg_{0.5}Fe_{1.0}Al_{2.0}O₄ | 800 | None | 0 |
| Example 8 | Co_{1.0}Zn_{1.0}Fe_{1.0}Al_{0.5}O₄ | 1000 | Si | 1.0 |
| Example 9 | Co_{0.2}Ti_{0.2}Fe_{0.5}Al_{1.5}O₄ | 1150 | Al | 1.0 |
| Comparative Example 6 | Co_{1.0}Fe_{2.0}O₄ | 1250 | None | 0 |
| Comparative Example 7 | Co_{1.0}Mg_{1.0}Fe_{2.0}O₄ | 1000 | None | 0 |
| Comparative Example 8 | Co_{1.5}Zn_{0.5}Fe_{0.5}O₃ | 1150 | None | 0 |
| Comparative Example 9 | Co_{0.5}Mg_{0.5}Al_{2.0}O₄ | 1100 | None | 0 |
| Comparative Example 10 | Mg_{1.0}Fe_{1.0}Al_{1.0}O₄ | 1200 | None | 0 |
| Comparative Example 11 | Co_{1.0}Fe_{1.0}Al_{1.0}O₄ | 1100 | None | 0 |

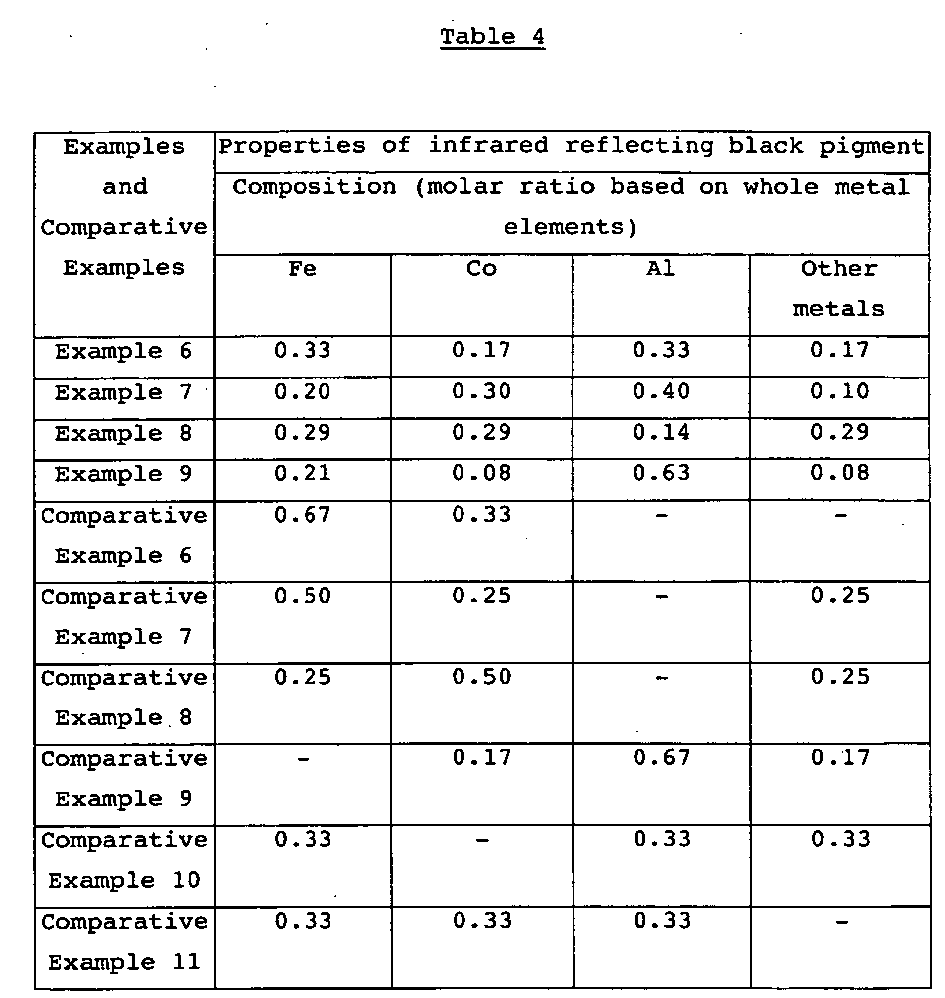

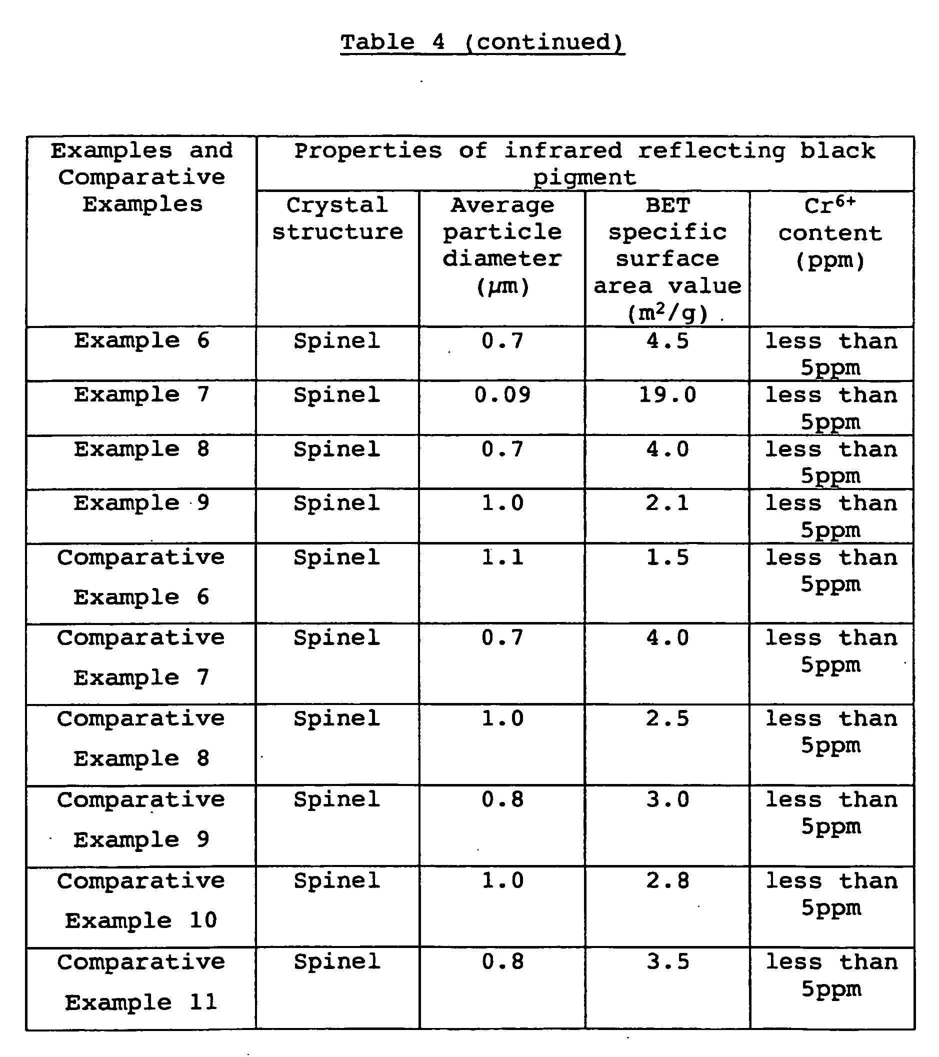

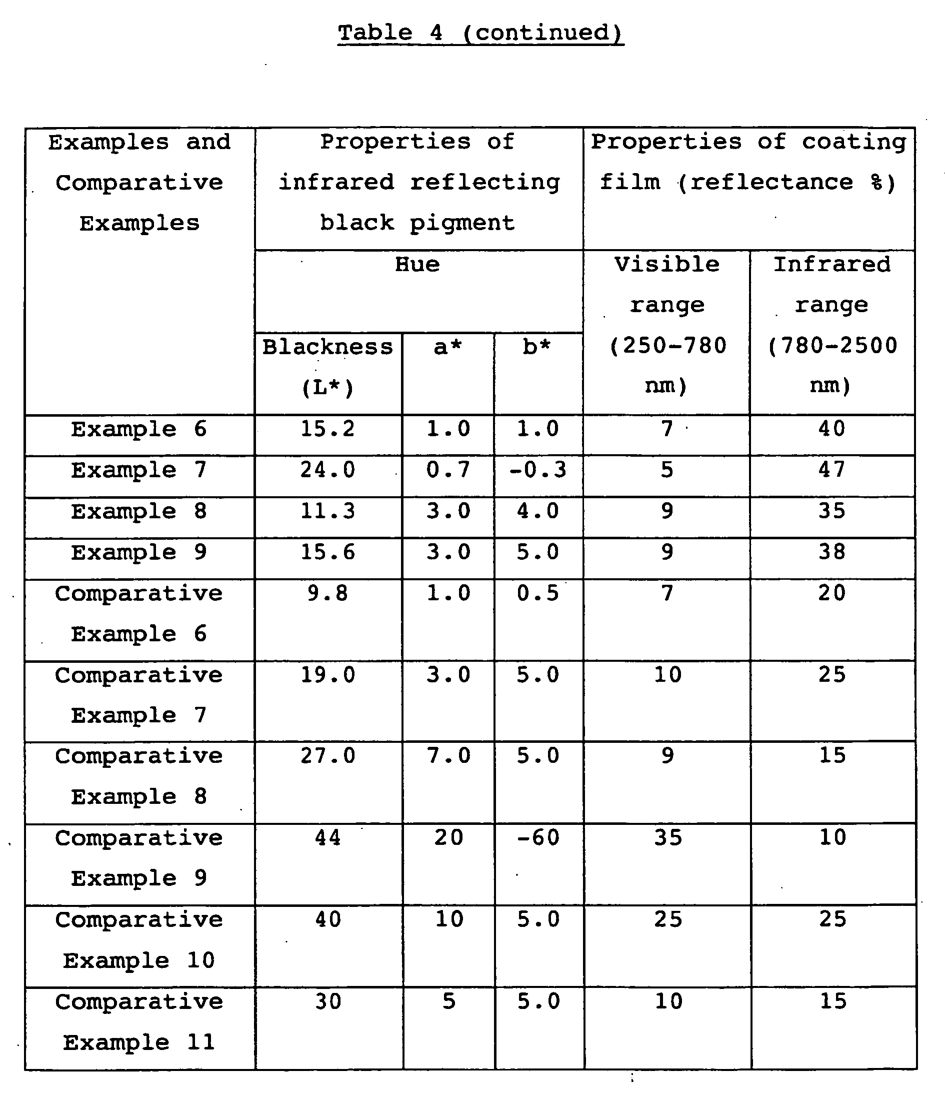

## Claims

1. An infrared reflecting black pigment comprising a composite oxide containing Fe, Co, Al and at least one metal selected from Mg, Ca, Sr, Ba, Ti, Zn, Sn, Zr, Si and Cu, said black pigment having an average particle diameter of 0.02 to 2.0 µm and a blackness (L* value) of not more than 30.

2. An infrared reflecting black pigment according to claim 1, wherein said black pigment has a spinel-type crystal structure.

3. An infrared reflecting black pigment according to claim 1 or 2, wherein said black pigment has an Fe content of 10 to 90 mol%, a Co content of 1.0 to 70 mol%an Al content of 1.0 to 70 mol% and a total content of Fe, Co and A1 of 20 to 98 mol% on the basis of whole metal elements contained in the black pigment.

4. An infrared reflecting black pigment according to claim 1, 2 or 3 wherein a content of the at least one metal selected from Mg, Ca, Sr, Ba, Ti, Zn, Sn, Zr, Si and Cu in the black pigment is 1.0 to 60 mol% on the basis of whole metal elements contained in the black pigment.

5. An infrared reflecting black pigment according to any one of the preceding claims, wherein a surface of said black pigment is coated with a compound containing at least one element selected from the group consisting of Si, Al, Zr and Ti.

6. An infrared reflecting black pigment according to claim 5, wherein said compound is coated in an amount of 0.1 to 10% by weight on the basis of a weight of the black pigment.

7. An infrared reflecting black pigment according to any one of claims 1 to 6 wherein the average reflectance of the infrared black pigment in an infrared wavelength range of 780 to 2500 nm is not less than 35%.

8. An infrared reflecting black pigment according to claim 7, wherein said black pigment has an average reflectance of not more than 10% in a visible light wavelength range of 250 to 780 nm and an average reflectance of not less than 35% in an infrared wavelength range of 780 to 2500 nm.

9. A paint comprising the infrared reflecting black pigment as defined in any one of the preceding claims.

10. A resin composition comprising the infrared reflecting black pigment as defined in any one of claims 1 to 8.

## Patentansprüche

1. Infrarotreflektierendes Schwarzpigment, umfassend ein Verbundoxid, enthaltend Fe, Co, Al und mindestens ein Metall, ausgewählt aus Mg, Ca, Sr, Ba, Ti, Zn, Sn, Zr, Si und Cu, wobei das Schwarzpigment einen durchschnittlichen Teilchendurchmesser von 0,02 bis 2,0 µm besitzt und eine Schwärze (L*-Wert) von nicht mehr als 30.

2. Infrarotreflektierendes Schwarzpigment gemäß Anspruch 1, wobei das Schwarzpigment eine Kristallstruktur vom Spinell-Typ besitzt.

3. Infrarotreflektierendes Schwarzpigment gemäß Anspruch 1 oder 2, wobei das Schwarzpigment einen Fe-Gehalt von 10 bis 90 mol%, einen Co-Gehalt von 1,0 bis 70 mol%, einen Al-Gehalt von 1, 0 bis 70 mol% und einen Gesamtgehalt an Fe, Co und Al von 20 bis 98 mol% auf der Basis der gesamten Metallelemente, die im Schwarzpigment enthalten sind, besitzt.

4. Infrarotreflektierendes Schwarzpigment gemäß Anspruch 1, 2 oder 3, wobei der Gehalt des mindestens einen Metalls, ausgewählt aus Mg, Ca, Sr, Ba, Ti, Zn, Sn, Zr, Si und Cu in dem Schwarzpigment 1,0 bis 60 mol% auf der Basis der gesamten Metallelemente, die in dem Schwarzpigment enthalten sind, ist.

5. Infrarotreflektierendes Schwarzpigment gemäß einem beliebigen der vorstehenden Ansprüche, wobei eine Oberfläche des Schwarzpigments mit einer Verbindung beschichtet ist, die mindestens ein Element enthält, ausgewählt aus der Gruppe, bestehend aus Si, Al, Zr und Ti.

6. Infrarotreflektierendes Schwarzpigment gemäß Anspruch 5, wobei die Verbindung in einer Menge von 0,1 bis 10 Gew.-% auf der Basis des Gewichts des Schwarzpigments aufgetragen ist.

7. Infrarotreflektierendes Schwarzpigment gemäß einem beliebigen der Ansprüche 1 bis 6, wobei das durchschnittliche Reflexionsvermögen des Infrarotschwarzpigments in einem Infrarotwellenlängenbereich von 780 bis 2500 nm nicht mehr als 35% beträgt.

8. Infrarotreflektierendes Schwarzpigment gemäß Anspruch 7, wobei das Schwarzpigment ein durchschnittliches Reflexionsvermögen von nicht mehr als 10% in einem Wellenlängenbereich sichtbaren Lichts von 250 bis 780 nm und ein durchschnittliches Reflexionsvermögen von nicht weniger als 35% in einem Infrarotwellenlängenbereich von 780 bis 2500 nm besitzt.

9. Anstrichmittel, umfassend das infrarotreflektierende Schwarzpigment wie in einem beliebigen der vorstehenden Ansprüche definiert.

10. Harzzusammensetzung, umfassend das infrarotreflektierende Schwarzpigment wie in einem beliebigen der Ansprüche 1 bis 8 definiert.

## Revendications

1. Pigment noir réfléchissant les infrarouges comprenant un oxyde composite contenant Fe, Co, Al et au moins un métal choisi parmi Mg, Ca, Sr, Ba, Ti, Zn, Sn, Zr, Si et Cu, ledit pigment noir ayant un diamètre de particule moyen de 0,02 à 2,0 µm et un degré d'obscurcissement (valeur L*) ne dépassant pas 30.

2. Pigment noir réfléchissant les infrarouges selon la revendication 1 où ledit pigment noir a une structure cristalline de type spinelle.

3. Pigment noir réfléchissant les infrarouges selon la revendication 1 ou 2, où ledit pigment noir a une teneur en Fe de 10 à 90 mol %, une teneur en Co de 1,0 à 70 mol %, une teneur en Al de 1,0 à 70 mol % et une teneur totale en Fe, Co et Al de 20 à 98 mol % sur la base des éléments métalliques totaux contenus dans le pigment noir.

4. Pigment noir réfléchissant les infrarouges selon la revendication 1, 2 ou 3 où une teneur du au moins un métal choisi parmi Mg, Ca, Sr, Ba, Ti, Zn, Sn, Zr, Si et Cu dans le pigment noir est 1,0 à 60 mol % sur la base des éléments métalliques totaux contenus dans le pigment noir.

5. Pigment noir réfléchissant les infrarouges selon l'une quelconque des revendications précédentes, où une surface dudit pigment noir est revêtue d'un composé contenant au moins un élément choisi dans le groupe consistant en Si, Al, Zr et Ti.

6. Pigment noir réfléchissant les infrarouges selon la revendication 5, où ledit composé est appliqué en revêtement en une quantité de 0,1 à 10 % en poids sur la base d'un poids du pigment noir.

7. Pigment noir réfléchissant les infrarouges selon l'une quelconque des revendications 1 à 6, où le facteur de réflexion moyen du pigment noir infrarouge dans une plage de longueurs d'onde infrarouges de 780 à 2 500 nm n'est pas inférieur à 35 %.

8. Pigment noir réfléchissant les infrarouges selon la revendication 7, où ledit pigment noir a un facteur de réflexion moyen ne dépassant pas 10 % dans une plage de longueurs d'onde de la lumière visible de 250 à 780 nm et un facteur de réflexion moyen non inférieur à 35 % dans une plage de longueurs d'onde infrarouges de 780 à 2 500 nm.

9. Peinture comprenant le pigment noir réfléchissant les infrarouges tel que défini dans l'une quelconque des revendications précédentes.

10. Composition de résine comprenant le pigment noir réfléchissant les infrarouges tel que défini dans l'une quelconque des revendications 1 à 8.
